# EUROPEAN PATENT SPECIFICATION

(11) **EP 3 236 377 B1**
(45) Date of publication and mention of the grant of the patent: **06.04.2022**
(21) Application number: 16201933.5
(22) Date of filing: 02.12.2016
(51) Int. Cl.: G06F 21/31, G06Q 20/40

(54) **METHOD, DEVICE AND SYSTEM FOR PREVENTING ACCOUNT FROM BEING BROKEN INTO**
VERFAHREN, VORRICHTUNG UND SYSTEM ZUR VERHINDERUNG VON EINBRUCH IN EIN KONTO
PROCÉDÉ, DISPOSITIF ET SYSTÈME DE PRÉVENTION DE PIRATAGE DE COMPTE

(30) Priority: 19.04.2016 CN 201610245335
(43) Date of publication of application: 25.10.2017
(73) Proprietor: Beijing Xiaomi Mobile Software Co., Ltd., Beijing 100085 (CN)
(72) Inventor: LIU, Daokuan, Beijing, 100085 (CN); TANG, Yao, Beijing, 100085 (CN); LIU, Shuai, Beijing, 100085 (CN); YANG, Chunhe, Beijing, 100085 (CN); CHEN, Yang, Beijing, 100085 (CN)
(74) Representative: Hughes, Andrea Michelle

(56) References cited:
- US-A1- 2010 198 728
- US-A1- 2015 012 439
- US-A1- 2015 229 622
- US-A1- 2015 324 880

## Description

### FIELD

The present disclosure generally relates to the field of communication technology, and more particularly to a method, device and system for preventing an account from being broken into.

### BACKGROUND

With the continuous development of terminal technology and network technology, intelligent terminal devices are emerging, and intelligent terminals are increasingly applied in people's daily life and work, which makes people's life more and more convenient. Currently, most intelligent terminal devices are able to pay, transfer, trade, etc. on a network platform through some payment software. Thus, payment security of terminals is becoming more and more important.

In existing technology, if a terminal of a user is lost, the terminal may generally be locked by a retrieval function so as to prevent the payment account in the terminal from being embezzled. However, the terminal embezzler may unlock the terminal by certain technical means or extract information about the payment account from the terminal, thus payment security of the terminal is low. US2015/012439 is directed to electronic money servers and related products and methods and relates to, e.g., processing performed when a portable terminal having an electronic money function is lost. US2010/198728 is directed to systems, apparatus and methods for managing a payment application on a mobile device such as a mobile phone. US2015/324880 is directed to verifying a status of a user device used for setting a transaction with a point of sale terminal. US2015/229622 is directed to restricting access to a user's account via one or more account access channels.

### SUMMARY

To solve the above described technical problems, the present disclosure provides a method, device and system for preventing an account from being broken into or illegally accessed.

In accordance with the first aspect of the embodiments of the present disclosure, a method for preventing an account from being broken into is provided and defined in claim 1.

deleted

deleted

The method may further comprise, after sending the service restriction request to the payment platform server: receiving an identity authentication request sent by the payment platform server; acquiring corresponding identity authentication information; and sending the identity authentication information to the payment platform server.

The identity authentication information may comprise one or more of:
ID number information; fingerprint information; and security information.

In accordance with the second aspect of the embodiments of the present disclosure, a method for preventing an account from being broken into is defined in claim 4.

deleted

Restricting a service authority of the first terminal or the second terminal may comprise: sending an identity authentication request to the first terminal or the second terminal; receiving target identity authentication information returned by the first terminal or the second terminal; performing identity authentication for the first terminal or the second terminal based on the target identity authentication information; and rejecting a service request for a first terminal or a second terminal that fails to pass the identity authentication.

Performing identity authentication for the first terminal or the second terminal based on the target identity authentication information may comprise: comparing the target identity authentication information with predetermined identity authentication information; determining the identity authentication has failed in response to determining that the target identity authentication information and the predetermined identity authentication information are different; wherein the predetermined identity authentication information includes one or more of: ID number information; fingerprint information; and security information.

In accordance with the third aspect of the embodiments of the present disclosure, a device for preventing an account from being broken into is defined in claim 7.

deleted

deleted

deleted

deleted

In accordance with the fourth aspect of the embodiments of the present disclosure, a device for preventing an account from being broken into is defined in claim 8.

deleted

deleted

deleted

deleted

In accordance with the fifth aspect of the embodiments of the present disclosure, a computer program is defined in claim 9.

In accordance with the sixth aspect of the embodiments of the present disclosure, a recording medium readable by a computer is defined in claim 10.

The technical solutions provided by embodiments of the present disclosure may include the following beneficial effects:

For a method for preventing an account from being broken into provided in the foregoing embodiments of the present disclosure, by acquiring a service restriction request when it is determined that a first terminal is stolen, and sending the service restriction request to a payment platform server to control the payment platform server to restrict a service authority related to the stolen first terminal, payment security of the terminal may be improved by restricting a service authority related to the stolen terminal by the payment platform server after the terminal is stolen.

For another method for preventing an account from being broken into provided in the foregoing embodiments of the present disclosure, by acquiring a service restriction request when it is determined that the first terminal is stolen, sending the service restriction request to the payment platform server, and receiving an identity authentication request sent by the payment platform server, acquiring corresponding identity authentication information, and sending the identity authentication information to the payment platform server to perform identity authentication, payment security of the terminal may be improved by restricting a service authority related to the stolen terminal by the payment platform server after the terminal is stolen.

For another method for preventing an account from being broken into provided in the foregoing embodiments of the present disclosure, by restricting the service authority related to the stolen terminal according to a service restriction request after receiving the service restriction request, payment security of the terminal may be improved.

It should be understood that both the foregoing general description and the following detailed description are merely illustrative and explanatory, and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
Fig. 1 is an exemplary system architecture diagram that may apply embodiments of the present disclosure according to an exemplary embodiment of the present disclosure;
Fig. 2 is a flow chart illustrating a method for preventing an account from being broken into according to an exemplary embodiment of the present disclosure;
Fig. 3 is a flow chart illustrating another method for preventing an account from being broken into according to an exemplary embodiment of the present disclosure;
Fig. 4 is a flow chart illustrating another method for preventing an account from being broken into according to an exemplary embodiment of the present disclosure;
Fig. 5 is a block diagram illustrating a device for preventing an account from being broken into according to an exemplary embodiment of the present disclosure;
Fig. 6 is a block diagram illustrating another device for preventing an account from being broken into according to an exemplary embodiment of the present disclosure;
Fig. 7 is a block diagram illustrating another device for preventing an account from being broken into according to an exemplary embodiment of the present disclosure;
Fig. 8 is a block diagram illustrating another device for preventing an account from being broken into according to an exemplary embodiment of the present disclosure;
Fig. 9 is a block diagram illustrating another device for preventing an account from being broken into according to an exemplary embodiment of the present disclosure;
Fig. 10 is a block diagram illustrating another device for preventing an account from being broken into according to an exemplary embodiment of the present disclosure;
Fig. 11 is a block diagram illustrating another device for preventing an account from being broken into according to an exemplary embodiment of the present disclosure;
Fig. 12 is a block diagram illustrating a system for preventing an account from being broken into according to an exemplary embodiment of the present disclosure;
Fig. 13 is a block diagram illustrating another system for preventing an account from being broken into according to an exemplary embodiment of the present disclosure;
Fig. 14 is a schematic diagram illustrating a device for preventing an account from being broken into according to an exemplary embodiment of the present disclosure.

### DETAILED DESCRIPTION

Exemplary embodiments will now be illustrated in detail, examples of which are illustrated in the accompanying drawings. When the following description refers to the accompanying drawings, the same numbers in different drawings represent same or similar elements, unless otherwise described. The implementations described in the following exemplary embodiments do not represent all of the implementations consistent with the present disclosure. Instead, they are merely examples of devices and methods consistent with aspects of the present disclosure as recited in the appended claims.

The terms used in the present disclosure are merely for the purpose of describing specific embodiments, and are not intended to limit the present disclosure. The singular forms "one", "the said", "the" used in the present disclosure and the appended claims are intended to include plural forms, unless the context expressly represents other meanings. It should also be understood that the term "and/or" used herein refers to and contains any or all possible combinations of one or more associated listed items.

It should be understood that the present disclosure may employ the terms first, second, third, etc. to describe various information, but these information should not be limited to these terms. These terms are only used to distinguish information of the same type. For example, the first information may be referred to as the second information, and similarly, the second information may be referred to as the first information without departing from the scope of the present disclosure. The word "if" as used herein may be interpreted as "when" or "upon" or "in response to determining" depending on the context.

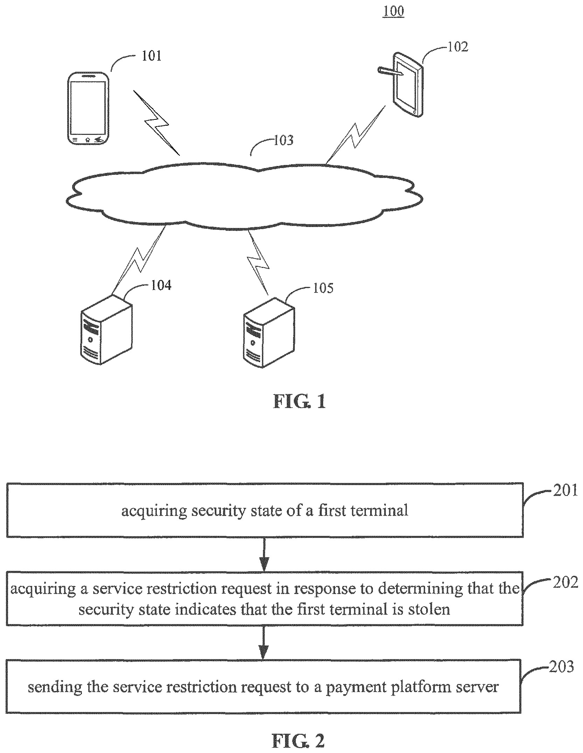

Referring to Fig. 1, which is an exemplary system architecture schematic diagram which applies embodiments of the present disclosure.

As illustrated in Fig. 1, the system architecture 100 may include terminal devices 101, 102, a network 103, a cloud platform server 104 and a payment platform server 105. The network 103 may be used to provide the medium of a communication link between the terminal devices 101, 102, the cloud platform server 104 and the payment platform server 105. The network 103 may include various connection types, such as wired, wireless communication link or optical fiber cable, etc.

The terminal devices 101, 102 may interact with the cloud platform server 104 and the payment platform server 105 through the network 103 to receive or send requests or information, etc. The terminal devices 101, 102, may be various electronic devices, including but not limited to: a mobile terminal device such as a smart phone, an intelligent wearable device, a tablet computer, a personal digital assistant and a laptop portable computer, etc.

The cloud platform server 104 may be a cloud platform server providing a terminal account management service and various other services. The cloud platform server may perform storage and analysis processing on the received data, and may also send a control command to the terminal devices, etc. The payment platform server 105 may be a payment platform server providing a terminal payment management service and various other services. The payment platform server may perform storage and analysis processing on the received data. The server may provide services in response to the user's service requests. It should be understood that, one server may provide one or more types of service, and the same service may be provided by a plurality of servers.

It should be understood that the number of the terminal devices, the network, the cloud platform server and the payment platform of the Fig. 1 are merely illustrative. There may be any number of terminal devices, network, cloud platform server and payment platform server depending on the actual requirements.

In the following the present disclosure will be described in detail in conjunction with specific embodiments.

As illustrated in Fig. 2, which is a flow chart illustrating a method for preventing an account from being broken into according to an exemplary embodiment, the method may be applied in both a terminal and a cloud platform server. In this embodiment, for the convenience of understanding, it will be illustrated by a terminal device having a payment function. It can be understood by those skilled in the art that the terminal device may include but is not limited to: a mobile terminal device such as a smart phone, an intelligent wearable device, a tablet computer, a personal digital assistant and a laptop portable computer, etc. The method may include the following steps.

In steps 201, a security state of a first terminal may be acquired.

In this embodiment, the security state of the first terminal may indicate whether the first terminal is stolen. For example, the security state of the first terminal may indicate that the first terminal is not stolen, and may also indicate that the first terminal has been stolen.

It should be noted that the executive body of this method may be a terminal or a cloud platform server, wherein the terminal may include a first terminal and other terminals other than the first terminal. If the executive body is the cloud platform server, in one implementation, the cloud platform server may acquire a security state of the first terminal by: first, detecting whether a terminal retrieval function is used to retrieve the first terminal; determining that the security state of the first terminal indicates that the first terminal is not stolen if the terminal retrieval function is not used to retrieve the first terminal; determining that the security state of the first terminal indicates that the first terminal has been stolen if it is detected that the terminal retrieval function is used to retrieve the first terminal.

In another implementation, a cloud platform server may also acquire the security state of the first terminal by: first, detecting whether a terminal retrieval function is used to retrieve the first terminal; determining that the security state of the first terminal indicates that the first terminal is not stolen if the terminal retrieval function is not used to retrieve the first terminal; counting the number of times that the terminal retrieval function is used to retrieve the first terminal in a predetermined period of time if it is detected that the terminal retrieval function is used to retrieve the first terminal, wherein if the number of times that the terminal retrieval function is used to retrieve the first terminal is less than a predetermined threshold, it is determined that the security state of the first terminal indicates that the first terminal is not stolen; and if the number of times that the terminal retrieval function is used to retrieve the first terminal is greater than the predetermined threshold, it is determined that the security state of the first terminal indicates that the first terminal has been stolen.

If the executive body is the first terminal, then the security state information of the first terminal may be acquired from the cloud platform server. The cloud platform server may send the security state information of the first terminal to the first terminal, and the first terminal may determine the security state of the first terminal according to the security state information of the first terminal sent by the cloud platform server.

If the executive body is terminals other than the first terminal, for example, it may be other terminals which login the same account as the first terminal. In one implementation, the security state of the first terminal may be determined according to the situation that the user uses this terminal to seek the first terminal, for example, if this terminal is used to retrieve the first terminal, or the number of times that this terminal is used to retrieve the first terminal is greater than or equal to the predetermined threshold, it is determined that the security state of the first terminal indicates that the first terminal has been stolen.

In another implementation, the security state information of the first terminal may also be acquired from the cloud platform server. The cloud platform server may send the security state information of the first terminal to this terminal, and this terminal may determine the security state of the first terminal according to the security state information of the first terminal sent by the cloud platform server.

In step 202, a service restriction request may be acquired in response to determining that the security state indicates that the first terminal is stolen.

In one implementation of the present embodiment, the service restriction request may include a terminal identification of the first terminal, wherein the terminal identification of the first terminal may be a device identification of the first terminal, such as the terminal serial number of the first terminal. The service restriction request may be used to control the payment platform server to restrict a service authority of the first terminal, and all service authority for using the first terminal (e.g., service authority requested by all the accounts logged in the first terminal) are restricted.

**In** another implementation of the present embodiment, other than the terminal identification of the first terminal, the service restriction request may also include the payment account to be restricted corresponding to the first terminal. Wherein the payment account to be restricted corresponding to the first terminal may be a payment account that ever logged in using the first terminal, for example, a WeChat payment account, an Alipay account and a bank account etc. that ever logged in using the first terminal. The service restriction request may be used to control the payment platform server to restrict a service authority of the first terminal, and also may be used to control the payment platform sever to restrict a service authority of a second terminal which logs into the payment account to be restricted (e.g., a service authority requested by the payment account that logged in a second terminal other than the first terminal).

**In** yet another implementation of the present embodiment, the service restriction request may also include the type of the service authority to be restricted. The type of the service authority may include various types, for example, transfer, pay, receive and investment transaction etc., the type of the service authority to be restricted may be a designated type of service authority chosen by a user, for example, the user may choose transfer and pay service authority type as the service authority type to be restricted. In the case of controlling the payment platform server to restrict a service authority of the first tenninal and the second terminal, it may only restrict services of the service authority type to be restricted of the first terminal and the second terminal.

For example, first, the terminal identification of the first tenninal and the payment account to be restricted corresponding to the first terminal may be acquired. Then, the service restriction request may be acquired according to the terminal identification of the first terminal and the payment account to be restricted.

In step 203, the service restriction request may be sent to the payment platform server.

In the present embodiment, the service restriction request may be sent to the payment platform server so as to control the payment platform server to restrict a service authority of the first terminal or the second terminal.

For the method for preventing an account from being broken into provided in the foregoing embodiments of the present disclosure, by acquiring a service restriction request when it is determined that the first terminal is stolen, and sending the service restriction request to a payment platform server so as to control the payment platform server to restrict a service authority related to the stolen first terminal, payment security of the terminal may be improved by restricting a service authority related to the stolen terminal by the payment platform server after the tenninal is stolen.

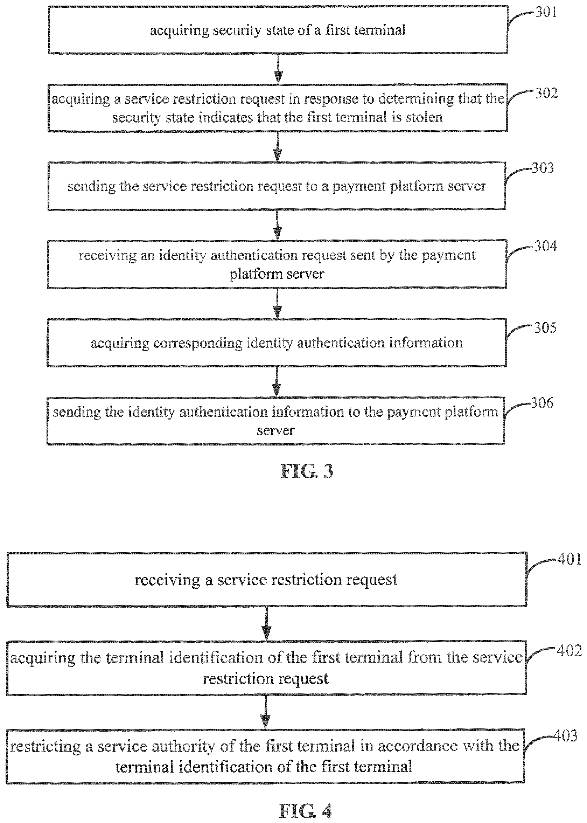

As illustrated in Fig. 3, which is a flow chart illustrating another method for preventing an account from being broken into according to an exemplary embodiment, the method may be used in a terminal. The method may include the following steps.

In step 301, the security state of the first terminal may be acquired.

In step 302, a service restriction request may be acquired in response to determining that the security state indicates that the first terminal is stolen.

In step 303, the service restriction request may be sent to the payment platform server.

In step 304, an identity authentication request sent by the payment platform server may be received.

In the present embodiment, after receiving the service restriction request, the payment platform server may restrict a service authority of the first terminal or the second terminal. When the first terminal or the second terminal sends a service request to the payment platform server, if the service request is a restricted service request, then the payment platform sever will send an identity authentication request to the first terminal or the second terminal. The identity authentication request sent by the payment platform server may be received.

It should be noted that the executive body of this method may be a terminal including the first terminal and the second terminal. If the executive body is the first terminal, then the first terminal may receive the identity authentication request sent by the payment platform server. If the executive body is the second terminal, then the second terminal may receive the identity authentication request sent by the payment platform server.

In step 305, the corresponding identity authentication information may be acquired.

In step 306, the identity authentication information may be sent to the payment platform server.

In the present embodiment, the identity authentication information may include one or more of: ID number information; fingerprint information; and security information, etc. For example, upon receiving the identity authentication request sent by the payment platform server, it is needed to gather identity authentication information according to the identity authentication request. Then, the identity authentication information may be sent to the payment platform server.

For example, if the identity authentication request indicates to acquire the ID number information corresponding to the first terminal or the payment account to be restricted, then the first terminal or the second terminal may first need to provide one ID number information input interface, the user may input ID number information through this information input interface. After gathering the ID number information, the first terminal or the second terminal may send the ID number information to the payment platform server to enable the payment platform server to perform the identity authentication according to the ID number information.

For another example, if the identity authentication request indicates to acquire the fingerprint information corresponding to the first terminal or the payment account to be restricted, then the first terminal or the second terminal may first need to initiate a fingerprint information input interface, the user may input the fingerprint information through this fingerprint information input interface. After gathering the fingerprint information, the first terminal or the second terminal may send the fingerprint information to the payment platform server to enable the payment platform server to perform the identity authentication according to the fingerprint information.

For yet another example, if the identity authentication request indicates to acquire the security information corresponding to the first terminal or the payment account to be restricted, then the first terminal or the second terminal may first need to output the security problems and provide one security information input interface, the user may input security information through this security information input interface. After gathering the security information, the first terminal or the second terminal may send the security information to the payment platform server to enable the payment platform server to perform identity authentication according to the security information.

For the method for preventing an account from being broken into provided in the foregoing embodiments of the present disclosure, by acquiring a service restriction request when it is determined that the first terminal is stolen, sending the service restriction request to the payment platform server, and receiving an identity authentication request sent by the payment platform server, acquiring corresponding identity authentication information, and sending the identity authentication information to the payment platform server to perform identity authentication, payment security of the terminal may be improved by restricting a service authority related to the stolen terminal by the payment platform server after the terminal is stolen.

As illustrated in Fig. 4, which is a flow chart illustrating another method for preventing an account from being broken into according to one exemplary embodiment, the method may be used in a payment platform server. The method may include the following steps.

In step 401, a service restriction request may be received.

In one implementation of the present embodiment, the service restriction request may include the terminal identification of the first terminal to be restricted, wherein the terminal identification of the first terminal may be a device identification of the first terminal. The service restriction request may be used to control the payment platform server to restrict a service authority of the first terminal.

In another implementation of the present embodiment, other than the terminal identification of the first terminal, the service restriction request may also include the payment account to be restricted corresponding to the first terminal. Wherein the payment account to be restricted corresponding to the first terminal may be a payment account that ever logged in using the first terminal. The service restriction request may be used to control the payment platform server to restrict a service authority of the first terminal, and also may be used to control the payment platform sever to restrict a service authority of a second terminal which logs into the payment account to be restricted.

In step 402, the terminal identification of the first terminal may be acquired from the service restriction request.

In step 403, a service authority of the first terminal may be restricted according to the terminal identification of the first terminal.

In one implementation of the present embodiment, the service restriction request may include the terminal identification of the first terminal. The terminal identification of the first terminal may be acquired from the service restriction request, and a service authority of the first terminal may be restricted according to the terminal identification of the first terminal.

For example, a service authority of the first terminal may be restricted in the following manner: first, when the first terminal sends a service request to the payment platform server, if the service request is a restricted service, then the payment platform server will send an identity authentication request to the first terminal. The identity authentication request indicates to acquire the identity authentication information corresponding to the first terminal. The first terminal may gather the identity authentication information and return the gathered identity authentication information. The target identity authentication information returned by the first terminal may be received, and the identity authentication for the first terminal may be performed based on the target identity authentication information. For example, the target identity authentication information and the predetermined identity authentication information corresponding to the first terminal may be compared. If the target identity authentication information and the predetermined identity authentication information corresponding to the first terminal are different, then it is determined that the identity authentication has failed. At this time, the service request for the first terminal which fails to pass the identity authentication may be rejected.

In another implementation of the present embodiment, other than the terminal identification of the first terminal, the service restriction request may also include the payment account to be restricted corresponding to the first terminal. The payment account to be restricted corresponding to the first terminal may be acquired from the service restriction request, and the service authority of a second terminal which logins the payment account may be restricted.

For example, the service authority of the second terminal may be restricted in the following manner: first, when the second terminal sends a service request to the payment platform server, if the service request is a restricted service, then the payment platform server will send an identity authentication request to the second terminal. The identity authentication request indicates to acquire the identity authentication information corresponding to the second terminal. The second terminal may gather the identity authentication information and return the gathered identity authentication information. The target identity authentication information returned by the second terminal may be received, and identity authentication for the second terminal may be performed based on the target identity authentication information. For example, the target identity authentication information and the predetermined identity authentication information corresponding to the payment account to be restricted may be compared. If the target identity authentication information and the predetermined identity authentication information corresponding to the payment account to be restricted are different, then it is determined that the identity authentication has failed. At this time, the service request for the second terminal which fails to pass the identity authentication may be rejected.

In the present embodiment, the identity authentication information may include one or more of: ID number information; fingerprint information; and security information. It is to be understood that, the identity authentication information may also include other types of information, the present disclosure is not intended to limit the specific type of the identity authentication information.

For the method for preventing an account from being broken into provided in the foregoing embodiments of the present disclosure, by restricting the service authority related to the stolen terminal according to the service restriction request after receiving the service restriction request, payment security of the terminal may be improved.

It should be noted that, although the operations of the method of the present invention are described in a specific order in the accompanying figures, this does not require or imply that these operations must be performed in this specific order, or all of the illustrated operations must be performed to implement the desired results. Instead, the steps in the flow chats may be performed in a changed order. Additionally or optionally, some steps may be omitted, a plurality of steps may be combined into one step to perform, and/or one step may be separated into a plurality of steps to perform.

Corresponding to the embodiments of the foregoing method for preventing an account from being broken into, the present disclosure also provides embodiments of devices and systems applied thereof for preventing an account from being broken into.

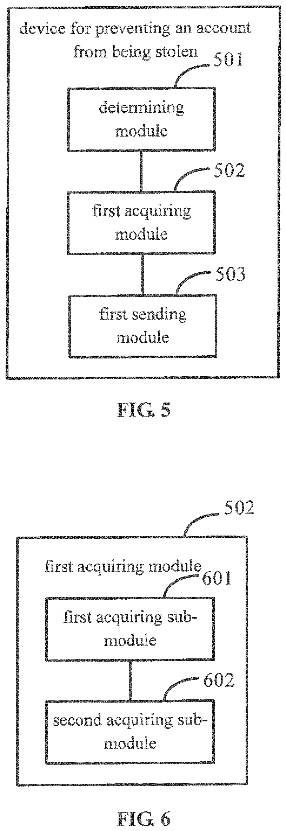

As illustrated in Fig. 5, which is a block diagram illustrating a device for preventing an account from being broken into according to an exemplary embodiment of the present disclosure, the device may include: a determining module 501, a first acquiring module 502 and a first sending module 503.

Wherein the determining module 501 may be configured to determine the security state of the first terminal.

The first acquiring module 502 may be configured to acquire a service restriction request in response to determining that the security state indicates that the first terminal is stolen, wherein the service restriction request may include a termination identification of the first terminal.

The first sending module 503 may be configured to send the service restriction request to the payment platform server, wherein the service restriction request may indicate that the payment platform server restricts a service authority of the first terminal.

As illustrated in Fig. 6, which is a block diagram illustrating another device for preventing an account from being broken into according to an exemplary embodiment of the present disclosure, on the basis of the embodiments shown in Fig. 5, in this embodiment, the first acquiring module 502 may include: a first acquiring sub-module 601 and a second acquiring sub-module 602.

Wherein the first acquiring sub-module 601 may be configured to acquire the terminal identification and a payment account to be restricted corresponding to the first terminal.

The second acquiring sub-module 602 may be configured to acquire the service restriction request in accordance with the terminal identification and the payment account, the service restriction request may further include the payment account.

Wherein the service restriction request may further indicate that the payment platform server restricts the service authority of the second terminal which logs into the payment account.

In some alternative embodiments, the service restriction request may further comprise the type of the service authority to be restricted.

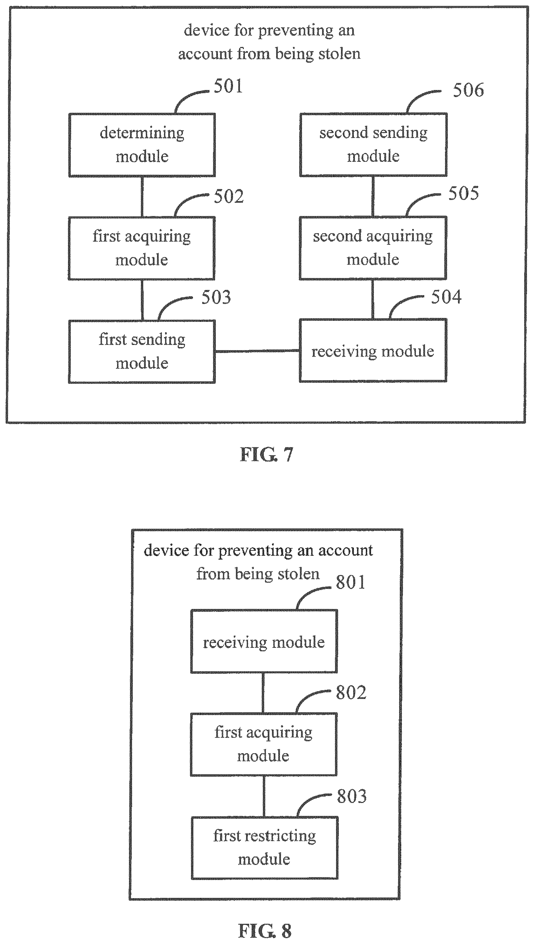

As illustrated in Fig. 7, which is a block diagram illustrating another device for preventing an account from being broken into according to one exemplary embodiment of the present disclosure, on the basis of embodiments shown in Fig. 5, the device may further include: a receiving module 504, a second acquiring module 505 and a second sending module 506.

Wherein the receiving module 504 may be configured to receive an identity authentication request sent by the payment platform server.

The second acquiring module 505 may be configured to acquiring the corresponding identity authentication information.

The second sending module 506 may be configured to send identity authentication information to the payment platform server.

In some other alternative embodiments, the identity authentication information may include one or more of: ID number information; fingerprint information; and security information.

As illustrated in Fig. 8, which is a block diagram illustrating another device for preventing an account from being broken into according to an exemplary embodiment of the present disclosure, the device may include: a receiving module 801, a first acquiring module 802 and a first restricting module 803.

Wherein the receiving module 801 may be configured to receive a service restriction request including the terminal identification of the first terminal to be restricted.

The first acquiring module 802 may be configured to acquire the terminal identification from the service restriction request.

The first restriction module 803 may be configured to restrict a service authority of the first terminal according to the terminal identification.

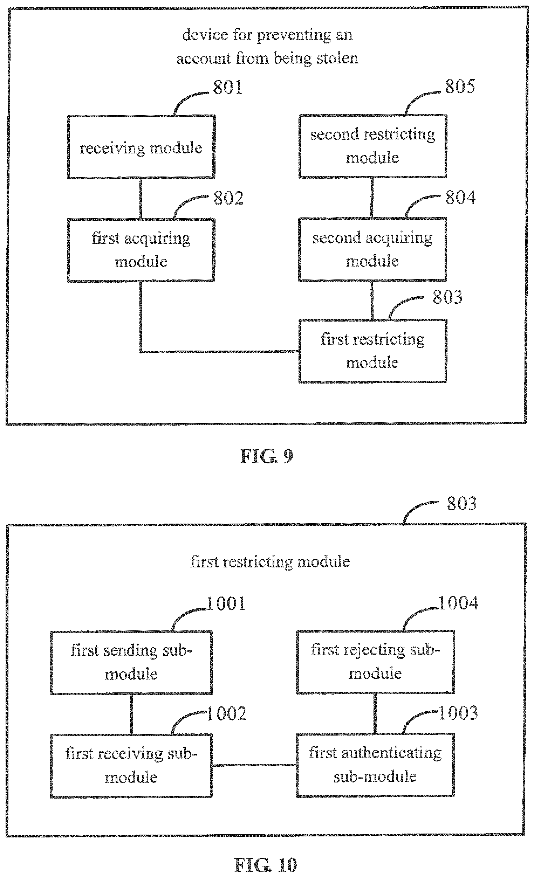

As illustrated in Fig. 9, which is a block diagram illustrating another device for preventing an account from being broken into according to one exemplary embodiment of the present disclosure, on the basis of embodiments shown in Fig. 8, the device may further include: a second acquiring module 804 and a second restricting module 805.

Wherein the second acquiring module 804 may be configured to acquire a payment account to be restricted corresponding to the first terminal from the service restriction request.

The second restricting module 805 may be configured to restrict a service authority of a second terminal which is a terminal that logs into the payment account.

As illustrated in Fig. 10, which is a block diagram illustrating another device for preventing an account from being broken into according to an exemplary embodiment of the present disclosure, on the basis of embodiments shown in Fig. 9, the first restricting module 803 may include: a first sending sub-module 1001, a first receiving sub-module 1002, a first authenticating sub-module 1003 and a first rejecting sub-module 1004.

Wherein the first sending sub-module 1001 may be configured to send an identity authentication request to the first terminal.

The first receiving sub-module 1002 may be configured to receive target identity authentication information returned by the first terminal.

The first authenticating sub-module 1003 may be configured to perform identity authentication for the first terminal based on the target identity authentication information.

The first rejecting sub-module 1004 may be configured to reject a service request for the first terminal that fails to pass the identity authentication.

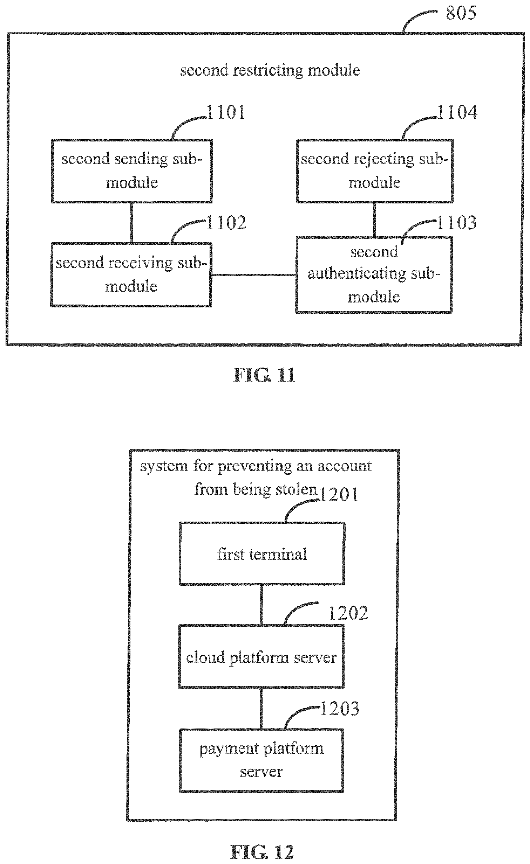

As illustrated in Fig. 11, which is a block diagram illustrating another device for preventing an account from being broken into according to an exemplary embodiment of the present disclosure, on the basis of embodiments shown in Fig. 9, the second restricting module 805 may include: a second sending sub-module 1101, a second receiving sub-module 1102, a second authenticating sub-module 1103 and a second rejecting sub-module 1104.

Wherein the second sending sub-module 1101 may be configured to send an identity authentication request to the second terminal.

The second receiving sub-module 1102 may be configured to receive target identity authentication information returned by the second terminal.

The second authenticating sub-module 1103 may be configured to perform identity authentication for the second terminal based on the target identity authentication information.

The second rejecting sub-module 1104 may be configured to reject a service request for the second terminal that fails to pass the identity authentication.

It should be understood that the forgoing devices may be pre-setup in a terminal or a server, or may be loaded into a terminal or a server by downloading, etc. Corresponding modules in the foregoing devices may cooperate with the modules in the terminal and server to implement the method for preventing an account from being broken into.

For device embodiments, as basically corresponding to the method embodiments, the relevant aspects may also refer to the illustration of the method embodiments. The device embodiments described above are merely illustrative, wherein the modules illustrated as separate components may be or may not be physically separated, and the components shown as modules may be or may not be physical units, i.e., may locate at the same place, or distribute over a plurality of network units. Part or all of modules may be chosen according to the actual requirements to implement the purpose of the present disclosure. The ordinary skilled in the art may understand and practice without any creative effort.

As illustrated in Fig. 12, which is a block diagram illustrating a system for preventing an account from being broken into according to an exemplary embodiment of the present disclosure, the system may comprise: a first terminal 1201, a cloud platform server 1202 and a payment platform server 1203.

Wherein the cloud platform server 1202 may be configured to acquire security state of the first terminal 1201, acquire a service restriction request in response to determining that the security state indicates that the first terminal is stolen, the service restriction request may include a terminal identification of the first terminal. The service restriction request may be sent to the payment platform server 1203.

The payment platform server 1203 may be configured to: receive the service restriction request, acquire the terminal identification from the service restriction request, restrict a service authority of the first terminal in accordance with the terminal identification.

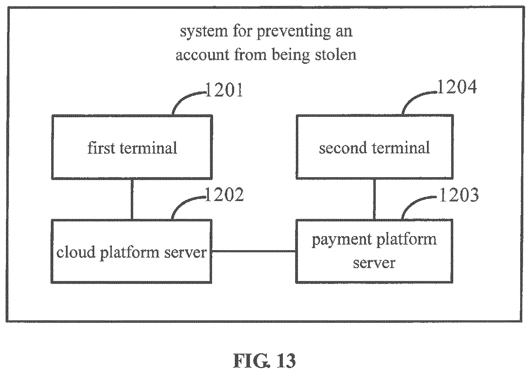

As illustrated in Fig. 13, which is a block diagram illustrating another system for preventing an account from being broken into according to an exemplary embodiment of the present disclosure, the system may also include: a second terminal 1204.

Wherein the cloud platform server 1202 may be configured to acquire the terminal identification and a payment account to be restricted corresponding to the first terminal, acquire the service restriction request in accordance with the terminal identification and the payment account, the service restriction request may further include the payment account.

The payment platform server 1203 may be configured to acquire the payment account from the service restriction request, restrict a service authority of the second terminal which logs into the payment account.

Accordingly, the present disclosure also provides a device for preventing an account from being broken into, comprising: a processor; a memory for storing processor-executable instructions; wherein the processor may be configured to: determine security state of a first terminal; acquire a service restriction request in response to determining that the security state indicates that the first terminal is stolen, the service restriction request including a terminal identification of the first terminal; send the service restriction request to a payment platform server, the service restriction request indicating that the payment platform server restricts a service authority of the first terminal.

Accordingly, the present disclosure also provides a device for preventing an account from being broken into, comprising: a processor; a memory for storing processor-executable instructions; wherein the processor may be configured to: receive a service restriction request including a terminal identification of a first terminal to be restricted; acquire the terminal identification from the service restriction request; restrict a service authority of the first terminal in accordance with the terminal identification.

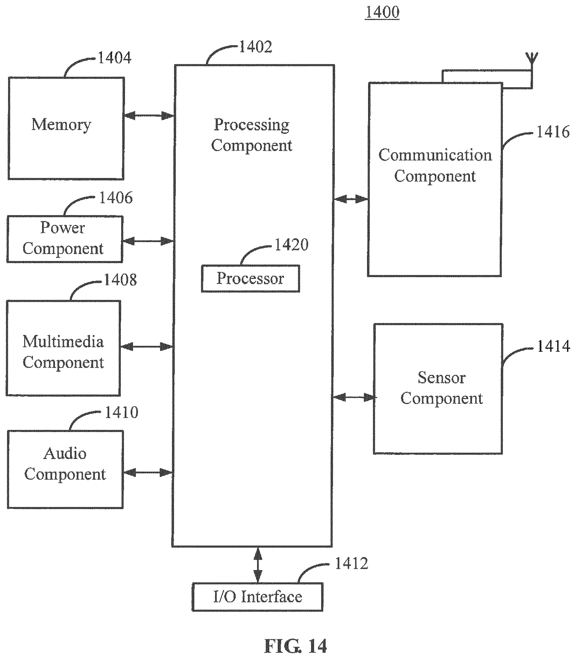

Fig. 14 is a schematic diagram a device 1400 for preventing an account from being broken into illustrated according to one exemplary embodiment. For example, the device 1400 may be mobile phone, computer, digital broadcast terminal, messaging device, game console, tablet device, medical device, fitness equipment, personal digital assistant, etc.

Referring to Fig. 14, device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operation of the device 1400, such as the operations associated with display, telephone call, data communications, camera operations and recording operations. The processing element 1402 may include one or more processors 1420 to execute instructions to perform all or part of the steps in the above described methods. Additionally, the processing component 1402 may include one or more modules which facilitate the interaction between the processing component 1402 and other components. For instance, the processing component 1402 may include multimedia module to facilitate the interaction between the multimedia component 1408 and the processing component 1402.

The memory 1404 is configured to store various types of data to support the operation of the device 1400. Examples of such data include instructions for any applications or methods operated on the device 1400, contacts data, phonebook data, messages, images, videos, etc. The memory 1404 may be implemented using any type of volatile or non-volatile memory devices or a combination thereof, such as a static random access memory (SRAM), an electrically erasable programmable read only memory (EEPROM), an erasable programmable read only memory (EPROM), a programmable read-only memory (PROM), a read-only memory (ROM), a magnetic memory, a flash memory, a magnetic disk or optical disk.

The power component 1406 provides power to various components of the device 1400. The power component 1406 may include a power management system, one or more power sources, and any other components associated with the generation, management, and distribution of power in the device 1400.

The multimedia component 1408 includes a screen providing an output interface between the device 1400 and the user. In some embodiments, the screen may include a liquid crystal display (LCD) and a touch panel (TP). If the screen includes the touch panel, the screen may be implemented as a touch screen to receive input signal from the users. The touch panel includes one or more touch sensors to sense touches, swipes and gestures on the touch panel. The touch sensor may not only sense a boundary of a touch or swipe action, but also detect the duration and pressure associated with the touch or swipe operation. In some embodiments, the multimedia component 1408 includes one front camera and/or rear camera. When the device 1400 is in an operation mode, such as a shooting mode or a video mode, the front camera and/or rear camera may receive external multimedia data. Each front camera and rear camera may be a fixed optical lens system or have focal length and optical zoom capability.

The audio component 1410 is configured to output and/or input audio signals. For example, the audio component 1410 includes a microphone ("MIC") configured to receive an external audio signal when the device 1400 is in an operation mode, such as a call mode, a recording mode and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include, but are not limited to: a home button, a volume button, a starting button, and a locking button.

The sensor component 1414 includes one or more sensors to provide various aspects of status assessments for the device 1400. For instance, the sensor component 1414 may detect an open/closed status of the device 1400, relative positioning of components, such as the display and the keypad of the device 1400, the sensor component 1414 may also detect a position change of the device 1400 or a component thereof, a presence or absence of a contact between the user and the device 1400, an orientation or acceleration/deceleration of the device 1400, and a temperature change of the device 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, a microwave sensor, or a temperature sensor.

The communication component 1416 is configured to facilitate the device 1400 to communication, wired or wirelessly, with other devices. The device 1400 can access a communication standard based wireless network, such as WiFi, 2G, or 3G, or a combination thereof. In one exemplary embodiment, the communication component 1416 receives a broadcast signal from an external broadcast management system or broadcasts the associated information via a broadcast channel. In one exemplary embodiment, the communication component 1516 further includes a near field communication (NFC) module to facilitate short-range communication. For example, the NFC module may be implemented based on radio frequency identification (RFID) technique, infrared data association (IrDA) technique, ultra-wideband (UWB) technique, Bluetooth (BT) technique, and other techniques.

In exemplary embodiments, the device 1400 may be implemented with one or more application specific integrated circuits (ASIC), digital signal processors (DSP), digital signal processing devices (DSPD), programmable logic devices (PLD), field programmable gate arrays (FPGA), controllers, micro-controllers, microprocessors, or other electronic components, for performing the above described methods.

In exemplary embodiments, there is also provided a non-transitory computer-readable storage medium including instructions, such as the memory 1404 including instructions, the instructions can be executed by the processor 1420 of the device 1400 to implement the above described methods. For example, the non-transitory computer-readable storage medium may be a ROM, a random access memory (RAM), a CD-ROM, a magnetic tape, a floppy disc, and an optical data storage device, etc.

Other embodiments of the present disclosure will be apparent to those skilled in the art from consideration of the specification and practice of the invention disclosed herein. The present disclosure is intended to cover any variations, uses or adaptations of the present disclosure, and these variations, uses and adaptations follow the general principles of the present disclosure and include common general knowledge and conventional techniques of the art which are not disclosed herein. The specification and the embodiments are merely considered as exemplary, and the true scope of the present disclosure are indicated by the following claims.

It should be appreciated that the present disclosure is not limited to the exact structures that have been described above and illustrated in the accompanying drawings, and that various modifications and changes can be made without departing from the scope thereof. It is intended that the scope of the present disclosure is only limited by the appended claims.

## Claims

1. A method for preventing an account from being broken into, wherein the method is executed by a cloud platform server, and the method comprises:
acquiring (201, 301), by the cloud platform server, a security state of a first terminal by detecting whether a terminal retrieval function is used to retrieve the first terminal and determining by the cloud platform server that the security state of the first terminal indicates that the first terminal has been stolen if it is detected that the terminal retrieval function is used to retrieve the first terminal;
acquiring (202, 302), by the cloud platform server, a service restriction request in response to determining that the security state indicates that the first terminal is stolen, the service restriction request including a terminal identification of the first terminal, a type of service authority to be restricted, and a payment account to be restricted corresponding to the first terminal,
wherein the type of service authority to be restricted is determined by a user of the first terminal, and the type of service authority to be restricted comprises one or more of transfer, pay, receive and investment transaction and wherein the payment account to be restricted corresponding to the first terminal is a payment account to which the first terminal has ever logged in; and
sending (203, 303), by the cloud platform server, the service restriction request to the payment platform server, the service restriction request indicating that the payment platform server restricts a service authority of the first terminal, and restricts a service authority of a second terminal which logs into the payment account.

2. The method of claim 1, further comprising, after the sending (203, 303) the service restriction request to the payment platform server:
receiving (304) an identity authentication request sent by the payment platform server;
acquiring (305) corresponding identity authentication information; and
sending (306) the identity authentication information to the payment platform server.

3. The method of claim 2, wherein the identity authentication information comprises one or more of:
ID number information;
fingerprint information; and
security information.

4. The method for preventing an account from being broken into of any one of claims 1-3, further comprising,
providing a payment platform server in communication with the cloud platform server; receiving (401), by the payment platform server, a service restriction request, wherein the service restriction request is the service restriction request acquired by the method of any one of claims 1-3;
acquiring (402), by the payment platform server, the terminal identification and the payment account from the service restriction request; and
restricting (403), by the payment platform server, a service authority of the first terminal to use any payment account to which the first terminal has ever logged in, in accordance with the terminal identification and restricting the type of service authority of a second terminal, wherein the second terminal is a terminal that logs into the payment account.

5. The method of claim 4, wherein the restricting a service authority of the first terminal or the second terminal comprises:
sending an identity authentication request to the first terminal or the second terminal;
receiving target identity authentication information returned by the first terminal or the second terminal;
performing identity authentication for the first terminal or the second terminal based on the target identity authentication information; and
rejecting a service request for a first terminal or a second terminal that fails to pass the identity authentication.

6. The method of claim 5, wherein the performing identity authentication for the first terminal or the second terminal based on the target identity authentication information comprises:
comparing the target identity authentication information with predetermined identity authentication information;
determining the identity authentication is failed in response to determining that the target identity authentication information and the predetermined identity authentication information are different;
wherein the predetermined identity authentication information includes one or more of:
ID number information;
fingerprint information; and
security information.

7. A device for preventing an account from being broken into, wherein the device comprises components for performing a method for preventing an account from being stolen according to claim 1.

8. The device according to claim 7, wherein the device components comprise: a processor (1402); a memory (1404) for storing processor-executable instructions; wherein the processor is configured to perform the method of claim 1.

9. A computer program including instructions for executing the steps of a method for preventing an account from being broken into according to claim 1 when said program is executed by a computer.

10. A recording medium readable by a computer and having recorded thereon a computer program including instructions for executing the steps of a method for preventing an account from being broken into according to claim 1.

## Patentansprüche

1. Verfahren zum Verhindern von Einbruch in ein Konto, wobei das Verfahren von einem Cloud-Plattform-Server ausgeführt wird und das Verfahren umfasst:
Beschaffen (201, 301), durch den Cloud-Plattform-Server, eines Sicherheitszustands eines ersten Endgeräts, indem erfasst wird, ob eine Endgerätauffindungsfunktion verwendet wird, um das erste Endgerät aufzufinden, und Ermitteln durch den Cloud-Plattform-Server, dass der Sicherheitszustand des ersten Endgeräts anzeigt, dass das erste Endgerät gestohlen wurde, falls erfasst wird, dass die Endgerätauffindungsfunktion verwendet wird, um das erste Endgerät aufzufinden;
Beschaffen (202, 302), durch den Cloud-Plattform-Server, einer Diensteinschränkungsanfrage in Reaktion darauf, dass ermittelt wird, dass der Sicherheitszustand anzeigt, dass das erste Endgerät gestohlen wurde, wobei die Diensteinschränkungsanfrage eine Endgerätkennung des ersten Endgeräts, einen einzuschränkenden Dienstbewilligungstyp und ein einzuschränkendes Zahlungskonto entsprechend dem ersten Endgerät beinhaltet,
wobei der einzuschränkende Dienstbewilligungstyp von einem Benutzer des ersten Endgeräts ermittelt wird und der einzuschränkende Dienstbewilligungstyp eines oder mehreres von Überweisungs-, Zahlungs-, Eingangs- und Anlagetransaktion umfasst und wobei das einzuschränkende Zahlungskonto entsprechend dem ersten Endgerät ein Zahlungskonto ist, bei dem sich das erste Endgerät jemals angemeldet hat; und
Senden (203, 303), durch den Cloud-Plattform-Server, der Diensteinschränkungsanfrage an den Zahlungsplattformserver, wobei die Diensteinschränkungsanfrage anzeigt, dass der Zahlungsplattformserver eine Dienstbewilligung des ersten Endgeräts einschränkt und eine Dienstbewilligung eines zweiten Endgeräts, das sich bei dem Zahlungskonto anmeldet, einschränkt.

2. Verfahren nach Anspruch 1, weiter umfassend, nach dem Senden (203, 303) der Diensteinschränkungsanfrage an den Zahlungsplattformserver:
Empfangen (304) einer Identitätsauthentifizierungsanfrage, die von dem Zahlungsplattformserver gesendet wird;
Beschaffen (305) entsprechender Identitätsauthentifizierungsinformationen; und
Senden (306) der Identitätsauthentifizierungsinformationen an den Zahlungsplattformserver.

3. Verfahren nach Anspruch 2, wobei die Identitätsauthentifizierungsinformationen eine oder mehrere der Folgenden umfassen:
Ausweisnummerninformationen;
Fingerabdruckinformationen; und
Sicherheitsinformationen.

4. Verfahren zum Verhindern von Einbruch in ein Konto nach einem der Ansprüche 1-3, weiter umfassend
Bereitstellen eines Zahlungsplattformservers in Kommunikation mit dem Cloud-Plattform-Server;
Empfangen (401), durch den Cloud-Plattform-Server, einer Diensteinschränkungsanfrage, wobei die Diensteinschränkungsanfrage die Diensteinschränkungsanfrage ist, die durch das Verfahren nach einem der Ansprüche 1-3 beschafft wird;
Beschaffen (402), durch den Cloud-Plattform-Server, der Endgerätkennung und des Zahlungskontos, von der Diensteinschränkungsanfrage; und
Einschränken (403), durch den Zahlungsplattformserver, einer Dienstbewilligung des ersten Endgeräts, ein Zahlungskonto zu verwenden, bei dem sich das erste Endgerät jemals angemeldet hat, in Übereinstimmung mit der Endgerätkennung, und Einschränken des Dienstbewilligungstyps eines zweiten Endgeräts, wobei das zweite Endgerät ein Endgerät ist, das sich bei dem Zahlungskonto anmeldet.

5. Verfahren nach Anspruch 4, wobei das Einschränken einer Dienstbewilligung des ersten Endgeräts oder des zweiten Endgeräts umfasst:
Senden einer Identitätsauthentifizierungsanfrage an das erste Endgerät oder das zweite Endgerät;
Empfangen von Zielidentitätsauthentifizierungsinformationen, mit denen das erste Endgerät oder das zweite Endgerät antwortet;
Durchführen von Identitätsauthentifizierung für das erste Endgerät oder das zweite Endgerät auf Basis der Zielidentitätsauthentifizierungsinformationen; und
Ablehnen einer Dienstanfrage für ein erstes Endgerät oder ein zweites Endgerät, das an der Identitätsauthentifizierung scheitert.

6. Verfahren nach Anspruch 5, wobei das Durchführen von Identitätsauthentifizierung für das erste Endgerät oder das zweite Endgerät auf Basis der Zielidentitätsauthentifizierungsinformationen umfasst:
Vergleichen der Zielidentitätsauthentifizierungsinformationen mit vorgegebenen Identitätsauthentifizierungsinformationen;
Ermitteln, dass die Identitätsauthentifizierung fehlgeschlagen ist, in Reaktion darauf, dass ermittelt wird, dass die Zielidentitätsauthentifizierungsinformationen und die vorgegebenen Identitätsauthentifizierungsinformationen unterschiedlich sind;
wobei die vorgegebenen Identitätsauthentifizierungsinformationen eine oder mehrere der Folgenden beinhalten:
Ausweisnummerninformationen;
Fingerabdruckinformationen; und
Sicherheitsinformationen.

7. Vorrichtung zum Verhindern von Einbruch in ein Konto, wobei die Vorrichtung Komponenten zum Durchführen eines Verfahrens zum Verhindern von Diebstahl eines Kontos nach Anspruch 1 umfasst.

8. Vorrichtung nach Anspruch 7, wobei die Vorrichtungskomponenten Folgendes umfassen:
einen Prozessor (1402);
einen Speicher (1404) zum Speichern prozessorausführbarer Anweisungen;
wobei der Prozessor zum Durchführen des Verfahrens nach Anspruch 1 konfiguriert ist.

9. Computerprogramm, das Anweisungen zum Ausführen der Schritte eines Verfahrens zum Verhindern von Einbruch in ein Konto nach Anspruch 1 beinhaltet, wenn das Programm von einem Computer ausgeführt wird.

10. Aufzeichnungsmedium, das von einem Computer lesbar ist und ein Computerprogramm darauf aufgezeichnet aufweist, das Anweisungen zum Ausführen der Schritte eines Verfahrens zum Verhindern von Einbruch in ein Konto nach Anspruch 1 beinhaltet.

## Revendications

1. Procédé pour éviter le piratage d'un compte, dans lequel le procédé est exécuté par un serveur de plateforme de cloud, et le procédé comprend :
une acquisition (201, 301), par le serveur de plateforme de cloud, d'un état de sécurité d'un premier terminal en détectant si une fonction de récupération de terminal est utilisée pour récupérer le premier terminal et le fait de déterminer grâce au serveur de plateforme de cloud que l'état de sécurité du premier terminal indique que le premier terminal a été volé s'il est détecté que la fonction de récupération de terminal est utilisée pour récupérer le premier terminal ;
une acquisition (202, 302), par le serveur de plateforme de cloud, d'une demande de restriction de service en réponse au fait de déterminer que l'état de sécurité indique que le premier terminal est volé, la demande de restriction de service incluant une identification de terminal du premier terminal, un type d'autorité de service devant être restreint, et un compte de paiement devant être restreint correspondant au premier terminal,
dans lequel le type d'autorité de service devant être restreint est déterminé par un utilisateur du premier terminal, et le type d'autorité de service devant être restreint comprend un ou plusieurs d'un virement, une paie, une réception et une opération de placement et dans lequel le compte de paiement devant être restreint correspondant au premier terminal est un compte de paiement auquel le premier terminal s'est vraiment connecté ; et
un envoi (203, 303), par le serveur de plateforme de cloud, de la demande de restriction de service au serveur de plateforme de paiement, la demande de restriction de service indiquant que le serveur de plateforme de paiement restreint une autorité de service du premier terminal, et restreint une autorité de service d'un second terminal qui se connecte au compte de paiement.

2. Procédé selon la revendication 1, comprenant en outre, après l'envoi (203, 303) de la demande de restriction de service au serveur de plateforme de paiement :
une réception (304) d'une demande d'authentification d'identité envoyée par le serveur de plateforme de paiement ;
une acquisition (305) d'informations d'authentification d'identité correspondantes ; et
un envoi (306) des informations d'authentification d'identité au serveur de plateforme de paiement.

3. Procédé selon la revendication 2, dans lequel les informations d'authentification d'identité comprennent une ou plusieurs de :
informations de numéro ID ;
informations d'empreintes digitales ; et
informations de sécurité.

4. Procédé pour éviter le piratage d'un compte selon l'une quelconque des revendications 1-3, comprenant en outre,
une fourniture d'un serveur de plateforme de paiement en communication avec le serveur de plateforme de cloud ;
une réception (401), par le serveur de plateforme de paiement, d'une demande de restriction de service, dans lequel la demande de restriction de service est la demande de restriction de service acquise par le procédé selon l'une quelconque des revendications 1-3;
une acquisition (402), par le serveur de plateforme de paiement, de l'identification de terminal et du compte de paiement à partir de la demande de restriction de service ; et
une restriction (403), par le serveur de plateforme de paiement, d'une autorité de service du premier terminal pour utiliser tout compte de paiement auquel le premier terminal s'est vraiment connecté, conformément à l'identification de terminal et une restriction du type d'autorité de service d'un second terminal, dans lequel le second terminal est un terminal qui se connecte au compte de paiement.

5. Procédé selon la revendication 4, dans lequel la restriction d'une autorité de service du premier terminal ou du second terminal comprend :
un envoi d'une demande d'authentification d'identité au premier terminal ou au second terminal ;
une réception d'informations d'authentification d'identité cibles retournées par le premier terminal ou le second terminal ;
une réalisation d'une authentification d'identité pour le premier terminal ou le second terminal sur la base des informations d'authentification d'identité cibles ; et
un rejet d'une demande de service pour un premier terminal ou un second terminal qui échoue à l'authentification d'identité.

6. Procédé selon la revendication 5, dans lequel la réalisation d'une authentification d'identité pour le premier terminal ou le second terminal sur la base des informations d'authentification d'identité cibles comprend :
une comparaison des informations d'authentification d'identité cibles à des informations d'authentification d'identité prédéterminées ;
le fait de déterminer que l'authentification d'identité a échoué en réponse au fait de déterminer que les informations d'authentification d'identité cibles et les informations d'authentification d'identité prédéterminées sont différentes ;
dans lequel les informations d'authentification d'identité prédéterminées incluent une ou plusieurs de :
informations de numéro ID ;
informations d'empreintes digitales ; et
informations de sécurité.

7. Dispositif pour éviter le piratage d'un compte, dans lequel le dispositif comprend des composants pour réaliser un procédé pour éviter le vol d'un compte selon la revendication 1.

8. Dispositif selon la revendication 7, dans lequel les composants de dispositif comprennent :
un processeur (1402) ;
une mémoire (1404) pour stocker des instructions exécutables par un processeur ;
dans lequel le processeur est configuré pour réaliser le procédé selon la revendication 1.

9. Programme d'ordinateur incluant des instructions pour exécuter les étapes d'un procédé pour éviter le piratage d'un compte selon la revendication 1 lorsque ledit programme est exécuté par un ordinateur.

10. Support d'enregistrement lisible par un ordinateur et présentant stocké sur celuici un programme d'ordinateur incluant des instructions pour exécuter les étapes d'un procédé pour éviter le piratage d'un compte selon la revendication 1.
